# EUROPÄISCHE PATENTSCHRIFT

(11) **EP 3 857 314 B1**
(45) Veröffentlichungstag und Bekanntmachung des Hinweises auf die Patenterteilung: **10.04.2024**
(21) Anmeldenummer: 19778446.5
(22) Anmeldetag: 19.09.2019
(51) Int. Cl.: G05B 13/04, G05B 17/02

(54) **VERFAHREN UND SYSTEM ZUR REGELUNG EINES CHEMISCHEN PROZESSES IN EINER GROSSTECHNISCHEN CHEMISCHEN ANLAGE**
METHOD AND SYSTEM FOR THE CLOSED-LOOP CONTROL OF A CHEMICAL PROCESS IN AN INDUSTRIAL-SCALE CHEMICAL INSTALLATION
PROCÉDÉ ET SYSTÈME DE RÉGULATION D'UN PROCESSUS CHIMIQUE DANS UNE INSTALLATION CHIMIQUE INDUSTRIELLE

(30) Priorität: 26.09.2018 DE 102018123792
(43) Veröffentlichungstag der Anmeldung: 04.08.2021
(73) Patentinhaber: thyssenkrupp Industrial Solutions AG, 45143 Essen (DE); thyssenkrupp AG, 45143 Essen (DE)
(72) Erfinder: SCHULZ, Marcel, 44797 Bochum (DE); SCHECKREITER, Dirk, 58239 Schwerte (DE)
(74) Vertreter: thyssenkrupp Intellectual Property GmbH
(86) Internationale Anmeldenummer: PCT/EP2019/075193
(87) Internationale Veröffentlichungsnummer: WO 2020/064506

(56) Entgegenhaltungen:
- EP-A2- 1 731 981
- US-A1- 2007 129 917

## Beschreibung

Die vorliegende Erfindung betrifft ein Verfahren zur Regelung eines in einer großtechnischen chemischen Anlage durchgeführten chemischen Prozesses gemäß Anspruch 1. Des Weiteren betrifft die vorliegende Erfindung ein System zur Regelung eines in einer großtechnischen chemischen Anlage durchgeführten chemischen Prozesses gemäß Anspruch 8 sowie eine chemische Anlage mit einem derartigen System gemäß Anspruch 9.

Ein stetiges Anliegen im Stand der Technik ist es, großtechnische chemische Anlagen mit einem erweiterten Prozessleitsystem (Advanced Process Control System) auszurüsten oder bereits bestehende Anlagen nachzurüsten, um den Anlagenbetrieb unter Berücksichtigung aller Sicherheitsregeln zu optimieren. Insbesondere bei komplex aufgebauten chemischen Produktionsanlagen, die eine Vielzahl von Teilsystemen (oft mehrere hundert) umfassen können, ist es das Ziel, die Steuerung, Transparenz, Wartung und Performance zu verbessern, sodass die Produktion entsprechend vorgegebener Sollwerte erreicht wird und zugleich ein Ausfall der chemischen Produktionsanlage, der in der Regel mit erheblichen Kosten verbunden ist, vermieden werden kann.

Aus der EP 1 731 981 A2 ist beispielsweise ein Datenverarbeitungssystem mit einer Anlagensteuerung für eine Anlage bekannt geworden, wobei die Anlagensteuerung zur Erfassung von gemessenen oder durch Berechnung abgeleiteten Prozessgrößen ausgebildet ist. Das Datenverarbeitungssystem umfasst ein Anlagenmodell zur Berechnung von simulierten Prozessgrößen unter Verwendung eines Teils der erfassten Prozessgrößen, sowie mindestens eine Benutzer-Schnittstelle zur Ausgabe der erfassten Prozessgrößen und der simulierten Prozessgrößen.

Aus der US 2007/0129917 A1 ist ferner ein Simulationssystem bekannt geworden, das miteinander verbundene Simulationsblöcke enthält, die Prozessmodelle verwenden, um Simulationsaktivitäten für eine Prozessanlage durchzuführen. Hierzu ist in eine Prozesssteuerungsumgebung für die Prozessanlage auf eine Weise integriert, die das Simulationssystem einfach zu verwenden und leicht für die Online-Prozesssimulation zu aktualisieren macht. Das offengelegte Simulationssystem ermöglicht es, sowohl zukünftige Vorhersagewerte als auch die aktuellen Vorhersagewerte von Prozessparametern, die von dem Simulationssystem erzeugt wurden, für die Leistungsbewertung sowie für die Steuerung des Anlagenbetriebs zur Verfügung zu stellen. Darüber hinaus ist das Simulationssystem mit der in Betrieb befindlichen Prozessanlage verbunden, um verschiedene Online-Messungen der Prozessanlage zu empfangen, und verwendet diese Messungen, um die im Simulationssystem verwendeten Prozessmodelle automatisch zu aktualisieren, damit das Simulationssystem mit den tatsächlichen Betriebsbedingungen der Prozessanlage abgestimmt bleibt.

Wenngleich hier bereits brauchbare Verfahren zur Regelung eines in einer großtechnischen chemischen Anlage durchgeführten chemischen Prozesses vorgeschlagen werden, so besteht dennoch Verbesserungsbedarf, insbesondere bei der Inbetriebnahme einer derartigen Anlage.

Vor diesem Hintergrund besteht die Aufgabe der vorliegenden Erfindung darin einen verbesserten großtechnischen, chemischen Anlagenbetrieb bereitzustellen.

Demgemäß wird zur Lösung der Aufgabe ein Verfahren zur Regelung eines chemischen Prozesses in einer großtechnischen, chemischen Anlage vorgeschlagen. Bei der zu regelnden großtechnischen, chemischen Anlage kann es sich um eine Produktionsanlage, insbesondere eine chemische Produktionsanlage, handeln. Die Anlage kann aus einer Vielzahl von Teilsystemen (z.B. 5 - 10 oder mehr) aufgebaut sein kann. Ein Teilsystem zeichnet sich insbesondere dadurch aus, dass es sich um eine eigenständig funktionsfähige Baugruppe handeln kann, dessen Funktion vorzugsweise direkten Einfluss auf die Produktion oder den Produktionsfluss hat. Beispielsweise kann die zu regelnde Anlage eine Anlage zur Herstellung von Schwefelsäure, Koks, Polymeren, Düngemitteln, Synthesegas, Zement, Harnstoff, Ammoniumnitrat oder eine Anlage zur Wasserentsalzung sein.

Das Verfahren umfasst die Schritte:
- sensorische Erfassung von Prozessdaten der chemischen Anlage,
- Übertragung der Prozessdaten an ein Leitsystem über einen Feldbus,
- Übertragung zumindest einer Teilmenge der Prozessdaten von dem Leitsystem an ein Computersystem, wobei das Computersystem ein Simulationsprogramm für eine stationäre und/oder dynamische Prozesssimulation des chemischen Prozesses, ein Regelungsprogramm zur Implementierung eines Reglers für den chemischen Prozess und einen Speicher zur Speicherung von simulierten Zustandsgrößen aufweist,
- zyklisch wiederholte Berechnung der simulierten Zustandsgrößen des chemischen Prozesses durch das Simulationsprogramm aus der Teilmenge der Prozessdaten und Speicherung der simulierten Zustandsgrößen in dem Speicher,
- Übertragung zumindest eines Soll-Wertes einer Regelungsgröße des chemischen Prozesses an das Regelungsprogramm,
- Lesen zumindest einer Teilmenge der simulierten Zustandsgrößen aus dem Speicher zur Eingabe in das Regelungsprogramm,
- Ermittlung einer Stellgröße zur Erreichung des Soll-Wertes durch das Regelungsprogramm durch Verarbeitung der aus dem Speicher gelesenen simulierten Zustandsgrößen und
- Übertragung der berechneten Stellgröße an das Leitsystem, wobeidie Stellgröße von dem Leitsystem über den Feldbus an ein Stellglied übertragen wird, wobei
- jedes Teilsystem ein oder mehrere Stellglieder aufweist, wobei
- das Stellglied das Teilsystem entsprechend der berechneten Stellgröße einstellt, wobei
- das Computersystem ein Machine-Learning-Modul beinhaltet, wobei zum Trainieren des Machine-Learning-Moduls Trainingsdatensätze verwendet werden, die zumindest die Teilmenge der simulierten Zustandsgrößen und die daraus von dem Regelungsprogramm berechneten Stellgrößen beinhalten, wobei
- die Trainingsdatensätze die in den Prozessdaten beinhaltete Antwort der chemischen Anlage auf die Stellgröße beinhalten, wobei
- nach Training des Machine-Learning-Moduls von dem Regelungsprogramm auf das Machine-Learning-Modul umgeschaltet wird, so dass dieses durch das Machine-Learning-Moduls ersetzt wird, und sodass die Stellgröße aus den gelesenen Zustandsgrößen durch das Machine-Learning-Modul ermittelt wird.

Unter einer "simulierten Zustandsgröße" wird hier eine real zum Zeitpunkt der Simulation vorhandene Zustandsgröße der chemischen Anlage, wie z.B. ein Parameterwert verstanden, für den kein durch einen Sensor erfasster Wert vorliegt, beispielsweise weil ein Sensor ausgefallen ist oder kein Sensor hierfür vorhanden ist.

Durch die vorgenannten Verfahrensschritte wird vorteilhaft erreicht, dass eine dynamische Prozesssimulation zur Ermittlung von Zustandsgrößen durch Simulation des laufenden Anlagenbetriebs durchgeführt wird, wobei die ermittelten Zustandsgrößen für die Regelung des Anlagenbetriebs in Echtzeit einsetzbar sind.

Die Erfassung von realen Prozessdaten der chemischen Anlage erfolgt durch Sensoren, die dazu eingerichtet sind, mindestens einen Parameterwert bzw. Prozessdaten oder Zustandsgrößen, welche die Anlage betrifft, zu messen. Die von den Sensoren erfassten Prozessdaten werden über einen Feldbus zu einem Leitsystem übertragen. Das Leitsystem dient dazu einen komplexen zeitlichen und materiell-inhaltlichen Planungs- und Istablauf übersichtlich darstellen und den steuernden menschlichen Eingriff zu unterstützen oder zu ermöglichen. Die Verwendung eines Feldbusses zur Übertragung der von den Sensoren erfassten Prozessdaten ist vorteilhaft, da der Feldbus die parallelen Leitungsbündel der einzelnen Sensoren zu dem Leitsystem durch ein einziges Buskabel ersetzt. Feldbusse, die für die chemische Anlage eingesetzt werden können, sind insbesondere ausgewählt aus der Gruppe bestehend aus Ethernet Powerlink, EtherNet/IP, CANopen, ARCNET, AS-Interface, EtherCAT und PROFIBUS. Zumindest eine Teilmenge der von den Sensoren erfassten Prozessdaten wird von dem Leitsystem an ein Computersystem übertragen, wobei das Computersystem ein Simulationsprogramm für eine stationäre und/oder dynamische Prozesssimulation des chemischen Prozesses, ein Regelungsprogramm zur Implementierung eines Reglers für den chemischen Prozess und einen Speicher zur Speicherung von simulierten Zustandsgrößen aufweist. Der Regler, der durch das Regelungsprogramm implementiert wird, kann beispielsweise ein Standardregler mit P-, PI-, PD- und PID-Verhalten sein. Für ein besseres dynamisches Verhalten der Regelgröße kann auch ein unstetiger Regler, wie beispielsweise ein Zweipunktregler, Mehrpunktregler und Fuzzy-Regler implementiert werden. Da es sich bei der chemischen Anlage um eine komplexere Regeleinrichtungen mit nichtlinearen Regelstrecken oder mehreren miteinander verknüpften Regelgrößen und Stellgrößen handeln kann, ist ebenfalls vorstellbar, dass ein angepasster Regler durch das Regelungsprogramm implementiert wird, wie beispielsweise ein digitaler Regler für vermaschte Regelungen, Mehrgrößenregelungen, Regelungen im Zustandsraum oder modellbasierte Regelungen.

In dem Computersystem findet eine zyklisch wiederholte Berechnung der simulierten Zustandsgrößen des chemischen Prozesses durch das Simulationsprogramm aus der Teilmenge der Prozessdaten und Speicherung der simulierten Zustandsgrößen in dem Speicher, z.B. Arbeitsspeicher, statt. Wenigstens ein Soll-Wert einer Regelungsgröße des chemischen Prozesses wird ebenfalls an das Regelungsprogramm übertragen, wobei der wenigstens eine Soll-Wert, wobei für eine chemische Anlage selbstverständlich mehrere Sollwerte vorgegeben werden können, manuell durch einen Nutzer, durch das Leitsystem oder durch Abruf hinterlegter Tabellen oder Werte aus Datenbanken eingepflegt wird. Weiterhin wird in das Regelungsprogramm zumindest eine Teilmenge der in dem Computersystem gespeicherten simulierten Zustandsgrößen zur Eingabe in das Regelungsprogramm eingelesen, wonach wenigstens eine Stellgröße zur Erreichung des Soll-Wertes durch das Regelungsprogramm durch Verarbeitung der aus dem Speicher gelesenen simulierten Zustandsgrößen ermittelt wird. Die berechnete Stellgröße wird an das Leitsystem übertragen. Von dem Leitsystem kann die ermittelte Stellgröße über einen Feldbus, wobei der Feldbus derselbe Feldbus wie oben beschrieben sein kann, an ein Stellglied in der chemischen Anlage übertragen werden.

Gemäß einem ersten Ausführungsbeispiel des erfindungsgemäßen Verfahrens kann das Leitsystem einen Server beinhalten und das Computersystem einen Client beinhalten, wobei der Server und der Client so konfiguriert sind, dass der Client auf den Server einen Lesezugriff durchführen kann, sodass die Teilmenge der Prozessdaten von dem Server an den Client übertragen wird und dass der Client auf den Server einen Schreibzugriff durchführen kann, um die berechnete Stellgröße an das Leitsystem zu übertragen.

Durch die Verwendung einer Client-Server-Lösung entsteht vorteilhaft eine Schnittstelle zwischen einem Computer und dem Leitsystem, über welche Daten ausgetauscht werden können, ohne dass die Echtzeitfähigkeit des Leitsystems beeinträchtigt wird. Ein weiterer Vorteil der Client-Server-Lösung ist, dass die Ankopplung des bzw. eines Computersystems an das Leitsystem der chemischen Anlage standortunabhängig erfolgen kann. Weiterhin wird durch die Client-Server-Lösung vorteilhaft erreicht, dass eine höhere Zugriffssicherheit gegeben ist, da sich der Client vor dem Zugriff auf spezielle Daten beim Server authentifizieren muss. Zudem ist das Hinzufügen und Trennen von Clients möglich, ohne dass der Betrieb der chemischen Anlage beeinträchtigt wird.

Für dieses Ausführungsbeispiel des erfindungsgemäßen Verfahrens kann weiterhin vorteilhaft vorgesehen sein, dass der Server des Leitsystems ein OPC-Server ist und der Client des Computersystems ein OPC-Client ist. OPC kann vorteilhaft für Echtzeitdaten (Überwachung), Datenarchivierung, Alarm-Meldungen und auch direkt zur Steuerung (Befehlsübermittlung) eingesetzt werden. Die Verwendung von OPC-Client und OPC-Server, vorzugsweise mit OPC Unified Architecture (OPC UA) Spezifikation ist insbesondere von Interesse, da hierbei kein COM-Interface, sondern eine WSDL (Web Services Description Language) beschrieben wird, die nach COM und in verschiedene Webservice-Protokolle umgesetzt werden kann, womit die Portabilität sichergestellt wird. Ein weiterer Vorteil der OPC Unified Architecture (OPC UA) Spezifikation ist, dass insgesamt sowohl die Skalierbarkeit als auch die Sicherheit gesteigert wurden.

Weiterhin kann vorgesehen sein, dass der Client als Master und der Server als Slave ausgebildet sind.

Für die Ausgestaltung, dass das Leitsystem einen Server beinhaltet und das Computersystem einen Client beinhaltet, wobei der Client als Master und der Server als Slave ausgebildet sein kann, kann weiterhin vorgesehen sein, dass das Leitsystem über eine Computerschnittstelle zum Anschluss des Computersystems verfügt, über die eine direkte Kommunikationsverbindung zwischen dem Leitsystem und dem Computersystem aufgebaut wird und zumindest die Übertragung der Teilmenge der Prozessdaten und die Übertragung der Stellgröße über die direkte Kommunikationsverbindung erfolgt.

Die Computerschnittstelle zum Anschluss des Computersystems, über die eine direkte Kommunikationsverbindung zwischen dem Leitsystem und dem Computersystem aufgebaut wird, kann beispielsweise durch eine Standard-Computerschnittstelle, wie z.B. USB, Ethernet, WLAN, LAN, Bluetooth oder andere bekannte Schnittstellen, realisiert sein. Aus Sicherheitsaspekten kann vorgesehen sein, dass die Computerschnittstelle ein Kabel umfasst bzw. eine Kabelverbindung (point-to-point) ist oder eine drahtlose Schnittstelle ist, wobei letztere eine Nahfeldkommunikation (NFC, Near Field Communication) oder eine Verschlüsselung aufweisen kann.

Das erfindungsgemäße Verfahren sieht weiterhin vor, dass die Stellgröße von dem Leitsystem über den Feldbus an ein Stellglied übertragen wird.

Das Stellglied kann durch diese Ausgestaltung gezielt in die Steuer- oder Regelstrecke eingreifen.

Das erfindungsgemäße Verfahren sieht weiterhin vor, dass das Computersystem ein Machine-Learning-Modul beinhaltet, wobei zum Trainieren des Machine-Learning-Moduls Trainingsdatensätze verwendet werden, die zumindest die Teilmenge der simulierten Zustandsgrößen und die daraus von dem Regelungsprogramm berechneten Stellgrößen beinhalten.

Machine-Learning ist aus dem Stand der Technik bekannt, vergleiche z.B. GOODFELLOWet al., Deep Learning, The MIT Press, 2017, ISBN 9780262035613.

Die Trainingsdatensätze zum Trainieren des Machine-Learning-Moduls beinhalten hierbei die in den Prozessdaten beinhaltete Antwort der chemischen Anlage auf die Stellgröße.

Das erfindungsgemäße Verfahren sieht vor, dass nach Training des Machine-Learning-Moduls von dem Regelungsprogramm auf das Machine-Learning-Modul umgeschaltet wird, so dass dieses durch das Machine-Learning-Modul ersetzt wird, und sodass die Stellgröße aus den gelesenen Zustandsgrößen durch das Machine-Learning-Modul ermittelt wird.

Bei dieser Ausgestaltung kann, nach dem Training des Machine-Learning-Moduls, auf das Regelungsprogramm und/oder den Leitstand kurzzeitig oder längerfristig verzichtet werden. Diese Ausgestaltung ist insbesondere interessant für die Inbetriebnahme einer chemischen Anlage. Beispielsweise kann das Machine-Learning-Modul in einer bestehenden Anlage trainiert werden. Sobald das Machine-Learning-Modul sämtliche benötigte Trainingsläufe abgeschlossen hat, kann es, da es zum Beispiel auf einem portablen Computersystem installiert ist, einfach mit dem Leitsystem der in Betrieb zu nehmenden chemischen Anlage verbunden werden und diese steuern bzw. regeln. Die Entscheidung, wann das Machine-Learning-Modul sämtliche benötigte Trainingsläufe abgeschlossen hat, kann beispielsweise über einen Konfidenzwert des Machine-Learning-Moduls festgelegt werden, wobei dieser Konfidenzwert größer als ein zuvor vergebener Schwellwert ist. Mit anderen Worten: Wenn das Machine-Learning-Modul eine Prognose mit einem Konfidenzwert abgeben kann, der größer als der Schwellwert ist, dann wird das Training abgeschlossen und/oder das Machine Learning-Modul anstelle oder zusätzlich zu dem Reglerprogramm für die Regelung der Anlage eingesetzt.

Nach einer weiteren Ausführungsform ist vorgesehen, dass das Machine-Learning-Modul eine Konfidenz (K; wobei 0 ≤ K ≤ 1) für die Ermittlung der Stellgröße berechnet und die kombinierte Stellgröße unter Berücksichtigung der jeweiligen Konfidenzen gewichtet ermittelt wird. Beispielsweise kann die Gewichtung des Ergebnisses für die Stellgröße aus dem Machine-Learning-Modul proportional oder identisch zu dem Konfidenzwert sein, mit dem das Machine-Learning-Modul das Ergebnis ermittelt hat. Somit kann die Stellgröße (S) eine Kombination aus der durch das Regelungsprogramm ermittelten Stellgröße (S_{R}) und der machine-learning Stellgröße (S_{ML}) sein. Weiterhin kann die Stellgröße (S) eine lineare Kombination aus der durch das Regelungsprogramm ermittelten Stellgröße (S_{R}) und der machine-learning Stellgröße (S_{ML}) sein (mathematisch darstellbar als S = α · S_{R} + β · S_{ML}; wobei α + β = 1). Ebenso kann die Stellgröße auch unter Berücksichtigung der jeweiligen Konfidenzen gewichtet ermittelt werden (mathematisch darstellbar als S = (1 - K) · S_{R} + K · S_{ML}).

Für beide alternativen Ausgestaltungen kann weiterhin vorgesehen sein, dass das Machine-Learning-Modul mit weiteren Trainingsdatensätzen trainiert wird, die aus dem weiteren Betrieb der chemischen Anlage durch die Regelung mittels des Machine-Learning-Moduls erzeugt werden.

Gemäß einem weiteren Aspekt wird ein System zur Regelung eines in einer großtechnischen chemischen Anlage durchgeführten chemischen Prozesses vorgeschlagen. Hierbei ist das System zur Durchführung des zuvor beschriebenen Verfahrens ausgebildet.

Gemäß einem weiteren Aspekt wird eine chemische Anlage mit einem System zur Regelung eines in einer großtechnischen chemischen Anlage durchgeführten chemischen Prozesses vorgeschlagen. Das System zur Regelung eines in einer großtechnischen chemischen Anlage durchgeführten chemischen Prozesses ist hierbei das zuvor beschriebene System, das zur Durchführung des zuvor beschriebenen Verfahrens ausgebildet ist.

Eine Ausgestaltung der Erfindung sieht vor, dass die chemische Anlage eine Anlage zur Herstellung von Schwefelsäure, Koks, Polymeren, Düngemitteln, Synthesegas, Zement, Harnstoff, Ammoniumnitrat oder zur Wasserentsalzung ist.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsbeispielen unter Bezugnahme auf die beigelegten Figuren näher, jedoch nicht darauf beschränkt, erläutert.

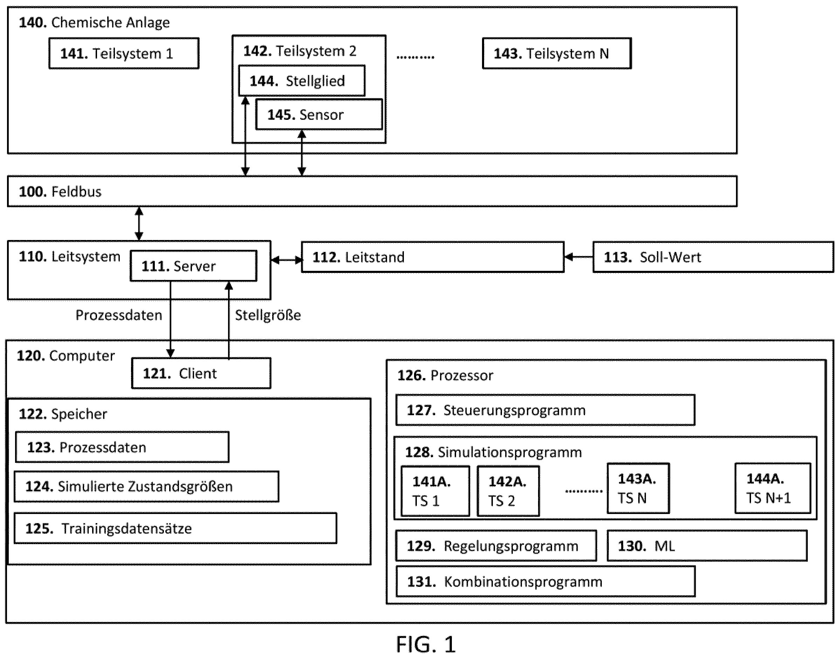

- Fig. 1: zeigt eine schematische Darstellung einer chemischen Anlage mit einem System zur Regelung eines in einer großtechnischen chemischen Anlage durchgeführten chemischen Prozesses, wobei das System zur Durchführung des erfindungsgemäßen Verfahrens ausgebildet ist, und

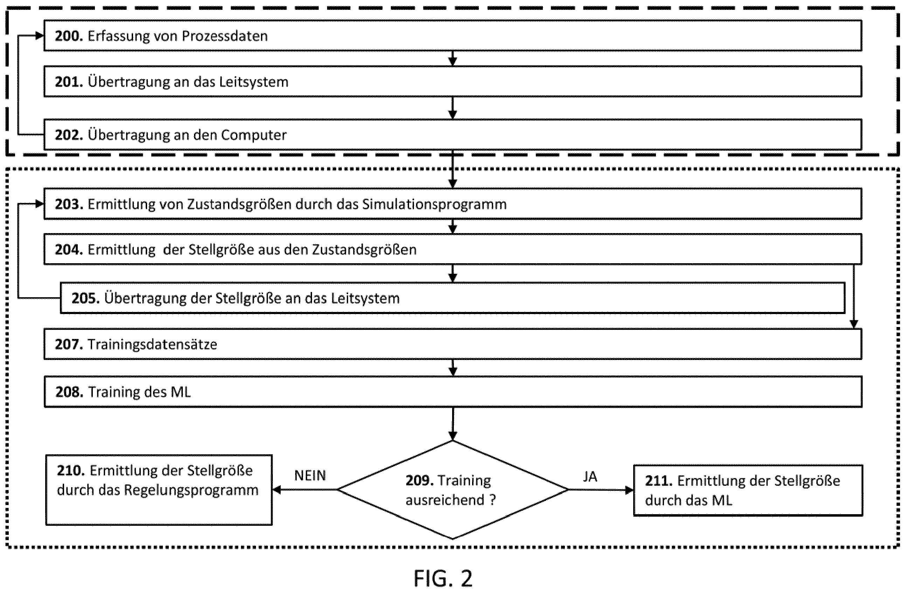

- Fig. 2: zeigt ein Ausführungsbeispiel eines Verfahrens gemäß der vorliegenden Erfindung, wobei die Erfassung von Prozessdaten, deren Übertragung an einen Computer, die Ermittlung von Zustandsgrößen und Stellgrößen, die Übertragung der Stellgrößen an das Leitsystem sowie Ermittlung der Stellgrößen aus den Zustandsgrößen für das Machine-Learning-Training schematisch dargestellt sind.

In den Figuren sind gleiche oder funktionsgleiche Elemente mit denselben Bezugszeichen versehen worden, sofern nichts Weiteres angegeben ist.

Die Fig. 1 zeigt eine schematische Ansicht eines Ausführungsbeispiels eines Systems gemäß der vorliegenden Erfindung. Das System umfasst eine chemische Anlage 140, insbesondere eine großtechnische chemische Anlage, und ist zur Durchführung eines Verfahrens zur Regelung eines chemischen Prozesses ausgebildet. Hierfür kann das System neben der chemischen Anlage 140 einen Feldbus 100, ein Leitsystem 110 sowie einen Computer 120 bzw. ein Computersystem umfassen. Die großtechnische chemische Anlage kann beispielsweise eine Anlage zur Herstellung von Schwefelsäure, Koks, Polymeren, Düngemitteln, Synthesegas, Zement, Harnstoff, Ammoniumnitrat oder eine Wasserentsalzungsanlage sein. Die chemische Anlage 140 umfasst eine Vielzahl von Teilsystemen 141, 142, 143, wie beispielsweise Brenner, Trockner, Konverter oder funktionale Leitungen bzw. Verbindungen. Die funktionellen Leitungen bzw. Verbindungen können selbst Teilsysteme 141, 142, 143 sein oder Teilsysteme 141, 142, 143 untereinander verbinden. Weiterhin können die Teilsysteme 141, 142, 143 mehrfach in der chemischen Anlage verbaut sein. Jedes dieser Teilsysteme kann wenigstens ein Stellglied 144 sowie keinen, einen oder mehrere Sensoren 145 aufweisen. Ein Sensor 145 ist dazu eingerichtet, mindestens einen Parameterwert bzw. Prozessdaten, welche die Anlage 140 betrifft, zu messen. Ein oder mehrere Sensor/en 145 können zum Beispiel eingerichtet sein, ein Teilsystem 141, 142, 143 zu überwachen. Beispielsweise kann eine Temperatur des Teilsystems 141, 142, 143 und/oder der zu verarbeiteten Substanz von einem Sensor 145 erfasst werden. Darüber hinaus kann ein Sensor eingerichtet sein weitere Prozessdaten, wie beispielsweise Positionsdaten, Durchflussmengen und/oder Zustandsdaten des Teilsystems 141, 142, 143 zu erfassen. Die von dem Sensor erfassten Prozessdaten können über einen Feldbus 100 mit einem Leitsystem 110 übertragen oder ausgetauscht werden.

Wie dargestellt, ist ebenfalls vorgesehen, dass wenigstens ein Sollwert 113 über einen optionalen Leitstand 112 zu dem Leitsystem 110 übertragen wird. Der wenigstens eine Sollwert kann durch Nutzereingabe, durch das Leitsystem oder durch Abruf hinterlegter Tabellen oder Werte aus Datenbanken zu dem Leitsystem 110 übertragen werden.

Zumindest eine Teilmenge der Prozessdaten 123 wird von dem Leitsystem 110 an ein Computersystem 120 übertragen (s. Pfeil von 111 nach 121).

Wie dargestellt, kann vorgesehen sein, dass das Leitsystem 110 einen Server 111 beinhaltet und das Computersystem 120 einen Client 121 beinhaltet, wobei der Server 111 und der Client 121 so konfiguriert sind, dass der Client 121 auf den Server 111 einen Lesezugriff, z.B. mittels eines request-response Protokolls, durchführen kann, sodass die Teilmenge der Prozessdaten von dem Server 111 an den Client 121 übertragen wird. Es ist ebenfalls vorstellbar, dass der Client 121 als Master ausgebildet ist und der Server 111 als Slave ausgebildet ist. Das Leitsystem 110 kann über eine Computerschnittstelle, z.B. eine Hardwareschnittstelle wie PCI-Bus, AGP, SCSI, USB, FireWire und EIA-232 oder Bluetooth, IrDA, WLAN, zum Anschluss des Computersystems 120 verfügen, über die eine direkte Kommunikationsverbindung zwischen dem Leitsystem 110 und dem Computersystem120 aufgebaut wird und zumindest die Übertragung der Teilmenge der Prozessdaten 123 und die Übertragung der Stellgröße über die direkte Kommunikationsverbindung erfolgt.

Wie dargestellt, umfasst das Computersystem 120 wenigstens ein Simulationsprogramm 128 für eine stationäre und/oder dynamische Prozesssimulation des chemischen Prozesses, ein Regelungsprogramm 129 zur Implementierung eines Reglers für den chemischen Prozess und einen Speicher 122 , z.B. ein Arbeitsspeicher, zur Speicherung von simulierten Zustandsgrößen 124.

In dem Computersystem 120 findet die zyklisch wiederholte Berechnung der simulierten Zustandsgrößen des chemischen Prozesses durch das Simulationsprogramm 128 aus der Teilmenge der Prozessdaten 123 sowie die Speicherung der simulierten Zustandsgrößen 124 in dem Speicher 122 statt. Das Simulationsprogramm 128 kann, wie dargestellt, mehrere Teilsystem-Programmmodule (TS 1, TS2, ..., TS N) 141A, 142A, 143A aufweisen, die jeweils zur Simulation eines Teilsystems (Teilsystem 1, Teilsystem 2, Teilsystem N) 141; 142; 143 der chemischen Anlage 140 konfiguriert sind. Das Teilsystem-Programmmodul (TS 1) 141A ist in diesem Ausführungsbeispiel derart konfiguriert, dass es das Teilsystem 1 (141) simuliert. Das Teilsystem-Programmmodul (TS 2) 142A ist in diesem Ausführungsbeispiel derart konfiguriert, dass es das Teilsystem 2 (142) simuliert und das Teilsystem-Programmmodul (TS N) 143A ist in diesem Ausführungsbeispiel so konfiguriert, dass es das Teilsystem N (143) simuliert. Das weitere Teilsystem-Programmmodul (TS N+1) 144A ist derart konfiguriert, dass es die einzelnen Teilsystem- Programmmodule (hier 141A bis 143A) schaltet oder regelt. Hierbei kann vorgesehen sein, dass die Aktualisierungsfrequenz der Programmodule 141A, 142 A, 143A in Abhängigkeit von der Dynamik des jeweils zugeordneten Teilsystems 141; 142; 143 konfiguriert ist, und die einzelnen Programmmodule 141A, 142 A, 143A jeweils eine oder mehrere der simulierten Zustandsgrößen berechnen und mit der jeweiligen Aktualisierungsfrequenz in dem Speicher 122 speichern.

Zeitgleich und/oder zeitlich versetzt wird zumindest ein Soll-Wert einer Regelungsgröße des chemischen Prozesses, wobei für eine chemische Anlage oftmals eine Vielzahl von Soll-Werten vorgegeben wird, an das Regelungsprogramm 129 übertragen. Zumindest eine Teilmenge der simulierten Zustandsgrößen 124 kann zur Eingabe in das Regelungsprogramm 129 aus dem Speicher 122 gelesen werde. Durch Verarbeitung der aus dem Speicher 122 gelesenen simulierten Zustandsgrößen 124 wird daraufhin eine Stellgröße zur Erreichung des Soll-Wertes 113 durch das Regelungsprogramm 129 ermittelt. Es wird darauf hingewiesen, dass selbstverständlich auch mehrere Stellgrößen zur Erreichung mehrerer Soll-Werte 113 durch das Regelungsprogramm 129 ermittelt werden können, jedoch hier aus Darstellbarkeitsgründen nur eine Stellgröße dargestellt ist.

Die berechnete Stellgröße wird daraufhin an das Leitsystem 110 übertragen. Wie oben beschrieben, kann vorgesehen sein, dass das Leitsystem 110 einen Server 111 beinhaltet und das Computersystem 120 einen Client 121 beinhaltet. Für die Übertragung der berechneten Stellgröße an das Leitsystem 110 (s. Pfeil von 121 nach 111) können der Server 111 und der Client 121 so konfiguriert sein, dass der Client 121 auf den Server 111 des Leitsystems 110 einen Schreibzugriff durchführen kann. Der Client 121 kann hierbei als Master und der Server 111 als Slave ausgebildet sein.

Weiterhin überträgt das Leitsystem 110 die berechnete Stellgröße über den Feldbus 100 an ein Stellglied 144 eines Teilsystems (hier beispielsweise dargestellt für Teilsystem 142, wobei jedes Teilsystem ein oder mehrere Stellglieder aufweisen kann), wobei das Stellglied 144 das Teilsystem entsprechend der berechneten Stellgröße einstellt.

Wie zudem in Fig. 1 dargestellt, kann das Computersystem 120 ein Machine-Learning-Modul 130 beinhalten. Das Machine-Learning-Modul 130 kann ein supervised Machine-Learning-Modul sein. Zum Trainieren des Machine-Learning-Moduls 130 können Trainingsdatensätze 125 verwendet werden, die zumindest die Teilmenge der simulierten Zustandsgrößen 124 und die daraus von dem Regelungsprogramm 129 berechneten Stellgrößen beinhalten. Hierbei können die Trainingsdatensätze 125 die in den Prozessdaten 123 beinhaltete Antwort der chemischen Anlage 140 auf die Stellgröße beinhalten.

Die Funktionsweise der chemischen Anlage mit dem System zur Regelung eines in einer großtechnischen chemischen Anlage durchgeführten chemischen Prozesses wird nachfolgend mittels des in Figur 2 gezeigten Ausführungsbeispiels des erfindungsgemäßen Verfahrens näher erläutert.

Zur besseren Nachvollziehbarkeit der Fig. 2 wurde der Ablauf des Verfahrens in zwei Prozessblöcken (gestrichelter Prozessblock, gepunkteter Prozessblock) wiedergegeben. Die Teilung des Prozesses in zwei Prozessblöcke erfolgt (wie dargestellt) im Bereich des Austauschs von Daten zwischen dem Server des Leitsystems und dem Client des Computersystems. Beide Prozesse können sowohl asynchron als auch synchron zueinander betrieben werden.

In dem oberen Prozessblock (gestrichelter Block) werden in einem ersten Schritt 200 die Prozessdaten erfasst. Dies kann mittels in der chemischen Anlage angebrachten Sensoren erfolgen. Die Prozessdaten werden in einem nächsten Schritt 201 an das Leitsystem übertragen, wobei das Leitsystem einen Server aufweisen kann, und in einem weiteren Schritt erfolgt die Übertragung der Daten an den Computer 202, wobei der Computer einen Client aufweisen kann. Der Pfeil von Schritt 202 zu Schritt 200 soll hierbei wiederspiegeln, dass auch Daten von dem Computer zu den Teilsystemen der chemischen Anlage (wo die Prozessdaten generiert werden) zurückübertragen werden können und die Schritte 200,201,202 einen Prozess bilden, der wiederholend ausgeführt werden kann.

In dem unteren Prozessblock (gepunkteter Block) werden in Schritt 203 die Zustandsgrößen durch das Simulationsprogramm ermittelt. Daraufhin erfolgt in Schritt 204 die Ermittlung der Stellgröße aus den Zustandsgrößen, die an das Leitsystem übertragen wird (s. Schritt 205). Das Leitsystem überträgt daraufhin die Stellgröße - ggf. nach Bestätigung durch den Nutzer - über den Leitstand und über den Feldbus an das Stellglied. Durch den Pfeil von Schritt 205 zu Schritt 203 wird dargestellt, dass die Schritte 203,204,205 einen Prozess bilden, der wiederholend ausgeführt werden kann. Die ermittelten Zustandsgrößen (Schritt 204) werden, neben dem oben beschriebenen Schritt 205, ebenfalls in die Trainingsdatensätze übertragen (s. Pfeil von Schritt 204 zu Schritt 207) und werden daraufhin zum Trainieren des Machine-Learning-Moduls verwendet (Schritt 208). In dem Schritt 209 wird ermittelt, ob das Training des Machine-Learning-Moduls ausreichend für eine Ermittlung der Stellgröße ist. Ist das Machine-Learning-Modul ausreichend trainiert, erfolgt die Ermittlung der Stellgröße durch das Machine-Learning-Modul (s. Schritt 211), ansonsten durch das Regelungsprogramm (s. Schritt 210).

## Patentansprüche

1. Verfahren zur Regelung eines in einer großtechnischen chemischen Anlage (140) durchgeführten chemischen Prozesses, wobei die chemische Anlage Teilsysteme umfasst, die sich dadurch auszeichnen, dass es sich um eigenständig funktionsfähige Baugruppe handelt, deren Funktion direkten Einfluss auf die Produktion oder den Produktionsfluss hat, mit folgenden Schritten:
- sensorische Erfassung von Prozessdaten der chemischen Anlage (140),
- Übertragung der Prozessdaten an ein Leitsystem (110) über einen Feldbus (100),
- Übertragung zumindest einer Teilmenge der Prozessdaten von dem Leitsystem (110) an ein Computersystem (120), wobei das Computersystem (120) ein Simulationsprogramm (128) für eine stationäre und/oder dynamische Prozesssimulation des chemischen Prozesses, ein Regelungsprogramm (129) zur Implementierung eines Reglers für den chemischen Prozess und einen Speicher (122) zur Speicherung von simulierten Zustandsgrößen (124) aufweist,
- zyklisch wiederholte Berechnung der simulierten Zustandsgrößen des chemischen Prozesses durch das Simulationsprogramm (128) aus der Teilmenge der Prozessdaten (123) und Speicherung der simulierten Zustandsgrößen (124) in dem Speicher (122),
- Übertragung zumindest eines Soll-Wertes einer Regelungsgröße des chemischen Prozesses an das Regelungsprogramm (129),
- Lesen zumindest einer Teilmenge der simulierten Zustandsgrößen (124) aus dem Speicher (122) zur Eingabe in das Regelungsprogramm (129),
- Ermittlung einer Stellgröße zur Erreichung des Soll-Wertes (113) durch das Regelungsprogramm (129) durch Verarbeitung der aus dem Speicher (122) gelesenen simulierten Zustandsgrößen (124),
- Übertragung der berechneten Stellgröße an das Leitsystem (110),
- wobei die Stellgröße von dem Leitsystem (110) über den Feldbus (100) an ein Stellglied (144) übertragen wird, wobei
- jedes Teilsystem ein oder mehrere Stellglieder (144) aufweist, wobei
- das Stellglied (144) das Teilsystem entsprechend der berechneten Stellgröße einstellt, **dadurch gekennzeichnet, dass**
- das Computersystem (100) ein Machine-Learning-Modul (130) beinhaltet, wobei zum Trainieren des Machine-Learning-Moduls (130) Trainingsdatensätze (125) verwendet werden, die zumindest die Teilmenge der simulierten Zustandsgrößen (124) und die daraus von dem Regelungsprogramm (129) berechneten Stellgrößen beinhalten, wobei
- die Trainingsdatensätze (125) die in den Prozessdaten (123) beinhaltete Antwort der chemischen Anlage (140) auf die Stellgröße beinhalten, wobei
- nach Training des Machine-Learning-Moduls (130) von dem Regelungsprogramm (129) auf das Machine-Learning-Modul (130) umgeschaltet wird, so dass dieses durch das Machine-Learning-Moduls (130) ersetzt wird, und sodass die Stellgröße aus den gelesenen Zustandsgrößen durch das Machine-Learning-Modul (130) ermittelt wird.

2. Verfahren nach Anspruch 1, wobei das Leitsystem (110) einen Server (111) beinhaltet und das Computersystem (120) einen Client (121) beinhaltet, wobei der Server (111) und der Client (121) so konfiguriert sind, dass der Client (121) auf den Server (111) einen Lesezugriff durchführen kann, sodass die Teilmenge der Prozessdaten (123) von dem Server (111) an den Client (121) übertragen wird und dass der Client (121) auf den Server (111) einen Schreibzugriff durchführen kann, um die berechnete Stellgröße an das Leitsystem (110) zu übertragen.

3. Verfahren nach Anspruch 2, wobei der Client (121) als Master und der Server (111) als Slave ausgebildet sind.

4. Verfahren nach Anspruch 2 oder 3, wobei das Leitsystem (110) über eine Computerschnittstelle zum Anschluss des Computersystems (120) verfügt, über die eine direkte Kommunikationsverbindung zwischen dem Leitsystem (110) und dem Computersystem aufgebaut wird und zumindest die Übertragung der Teilmenge der Prozessdaten (123) und die Übertragung der Stellgröße über die direkte Kommunikationsverbindung erfolgt.

5. Verfahren nach Anspruch wobei das Machine-Learning-Modul (130) mit weiteren Trainingsdatensätzen trainiert wird, die aus dem weiteren Betrieb der chemischen Anlage (140) durch die Regelung mittels des Machine-Learning-Moduls (130) erzeugt werden.

6. Verfahren nach einem der vorhergehenden Ansprüche, wobei das Simulationsprogramm (128) mehrere Programmmodule (141A, 142 A, 143A) aufweist, die jeweils zur Simulation eines Teilsystems (141; 142; 143) der chemischen Anlage (140) konfiguriert sind, wobei die Aktualisierungsfrequenz der Programmodule (141A, 142 A, 143A) in Abhängigkeit von der Dynamik des jeweils zugeordneten Teilsystems (141; 142; 143) konfiguriert ist, und die einzelnen Programmmodule (141A, 142 A, 143A) jeweils eine oder mehrere der simulierten Zustandsgrößen berechnen und mit der jeweiligen Aktualisierungsfrequenz in dem Speicher (122) speichern.

7. Verfahren nach Anspruch 6 wobei durch jedes der Programmodule (141A, 142 A, 143A) ein Verarbeitungsblock mit zumindest einem Eingang und einem Ausgang gebildet wird, und mit einem Verknüpfungsprogramm zur Verknüpfung der Verarbeitungsblöcke.

8. System zur Regelung eines in einer großtechnischen chemischen Anlage durchgeführten chemischen Prozesses, wobei das System zur Durchführung eines Verfahrens nach einem der vorhergehenden Ansprüche ausgebildet ist.

9. Chemische Anlage (140) mit einem System nach Anspruch 8

10. Chemische Anlage (140) nach Anspruch 9 wobei es sich um eine Anlage zur Herstellung von Schwefelsäure, Koks, Polymeren, Düngemitteln, Synthesegas, Zement, Harnstoff, Ammoniumnitrat oder zur Wasserentsalzung handelt.

## Claims

1. A method of controlling a chemical process carried out in a large-scale chemical plant (140), the chemical plant comprising subsystems **characterised in that** they are independently operable assemblies whose function has a direct influence on production or the production flow, comprising the following steps:
- Sensory recording of process data from the chemical plant (140),
- Transmission of the process data to a control system (110) via a field bus (100),
- Transmission of at least a subset of the process data from the control system (110) to a computer system (120), wherein the computer system (120) has a simulation program (128) for a steady-state and/or dynamic process simulation of the chemical process, a control program (129) for implementing a controller for the chemical process and a memory (122) for storing simulated state variables (124),
- cyclically repeated calculation of the simulated state variables of the chemical process by the simulation program (128) from the subset of the process data (123) and storage of the simulated state variables (124) in the memory (122),
- Transmission of at least one setpoint value of a controlled variable of the chemical process to the control program (129),
- Reading at least a subset of the simulated state variables (124) from the memory (122) for input into the control program (129),
- Determination of a manipulated variable to achieve the setpoint value (113) by the control program (129) by processing the simulated state variables (124) read from the memory (122),
- Transmission of the calculated actuating variable to the control system (110),
- wherein the manipulated variable is transmitted from the control system (110) via the field bus (100) to an actuator (144), wherein
- each subsystem comprises one or more actuators (144), wherein
- the actuator (144) adjusts the subsystem in accordance with the calculated manipulated variable, **characterised in that**
- the computer system (100) includes a machine learning module (130), wherein training data sets (125) are used to train the machine learning module (130), which training data sets contain at least the subset of the simulated state variables (124) and the manipulated variables calculated therefrom by the control program (129), wherein
- the training data records (125) include the response of the chemical plant (140) to the manipulated variable contained in the process data (123), wherein
- after training the machine learning module (130), the control program (129) is switched over to the machine learning module (130) so that the latter is replaced by the machine learning module (130) and so that the manipulated variable is determined from the read state variables by the machine learning module (130).

2. The method according to claim 1, wherein the control system (110) includes a server (111) and the computer system (120) includes a client (121), wherein the server (111) and the client (121) are configured such that the client (121) can perform a read access to the server (111) so that the subset of the process data (123) is transferred from the server (111) to the client (121) and that the client (121) can perform a write access to the server (111) to transfer the calculated manipulated variable to the control system (110).

3. The method according to claim 2, wherein the client (121) is designed as a master and the server (111) is designed as a slave.

4. The method according to claim 2 or 3, wherein the control system (110) has a computer interface for connecting the computer system (120), via which a direct communication link is established between the control system (110) and the computer system and at least the transmission of the subset of the process data (123) and the transmission of the manipulated variable takes place via the direct communication link.

5. The method according to claim 1, wherein the machine learning module (130) is trained with further training data sets that are generated from the further operation of the chemical plant (140) by the control by means of the machine learning module (130).

6. The method according to one of the preceding claims, wherein the simulation program (128) has a plurality of program modules (141A, 142 A, 143A), which are each configured to simulate a subsystem (141; 142; 143) of the chemical plant (140), wherein the update frequency of the program modules (141A, 142 A, 143A) is configured as a function of the dynamics of the respectively associated subsystem (141; 142; 143), and the individual program modules (141A, 142 A, 143A) each calculate one or more of the simulated state variables and store them in the memory (122) with the respective update frequency.

7. The method according to claim 6, wherein a processing block with at least one input and one output is formed by each of the program modules (141A, 142 A, 143A), and with a linking program for linking the processing blocks.

8. A system for controlling a chemical process carried out in a large-scale chemical plant, wherein the system is designed to carry out a process according to one of the preceding claims.

9. A chemical plant (140) comprising a system according to claim 8.

10. The chemical plant (140) according to claim 9, wherein it is a plant for the production of sulphuric acid, coke, polymers, fertilisers, synthesis gas, cement, urea, ammonium nitrate or for water desalination.

## Revendications

1. Procédé de régulation d'un processus chimique réalisé dans une installation chimique (140) à grande échelle, l'installation chimique comprenant des sous-systèmes qui se caractérisent par le fait qu'il s'agit de sous-ensembles capables de fonctionner de manière autonome et dont la fonction a une influence directe sur la production ou le flux de production, comprenant les étapes suivantes :
- saisie sensorielle des données de processus de l'installation chimique (140),
- Transmission des données de processus à un système de contrôle (110) via un bus de terrain (100),
- transmission d'au moins une quantité partielle des données de processus du système de contrôle (110) à un système informatique (120), le système informatique (120) présentant un programme de simulation (128) pour une simulation de processus stationnaire et/ou dynamique du processus chimique, un programme de régulation (129) pour l'implémentation d'un régulateur pour le processus chimique et une mémoire (122) pour la mémorisation de grandeurs d'état simulées (124),
- calcul répété de manière cyclique des grandeurs d'état simulées du processus chimique par le programme de simulation (128) à partir du sous-ensemble des données de processus (123) et stockage des grandeurs d'état simulées (124) dans la mémoire (122),
- transmission d'au moins une valeur de consigne d'une grandeur de régulation du processus chimique au programme de régulation (129),
- la lecture d'au moins un sous-ensemble des grandeurs d'état simulées (124) à partir de la mémoire (122) pour une entrée dans le programme de régulation (129),
- détermination d'une grandeur de réglage pour atteindre la valeur de consigne (113) par le programme de régulation (129) par traitement des grandeurs d'état simulées (124) lues dans la mémoire (122),
- Transmission de la grandeur de commande calculée au système de contrôle (110),
- la grandeur de réglage étant transmise par le système de commande (110) à un organe de réglage (144) via le bus de terrain (100), dans lequel
- chaque sous-système comprend un ou plusieurs actionneurs (144), où
- l'organe de réglage (144) règle le sous-système en fonction de la grandeur de réglage calculée, **caractérisé en ce que**
- le système informatique (100) comprend un module d'apprentissage automatique (130), des jeux de données d'apprentissage (125) étant utilisés pour l'entraînement du module d'apprentissage automatique (130), lesquels contiennent au moins la quantité partielle des grandeurs d'état simulées (124) et les grandeurs de réglage calculées à partir de celles-ci par le programme de régulation (129), où
- les enregistrements d'apprentissage (125) contiennent la réponse de l'installation chimique (140) à la grandeur de commande contenue dans les données de processus (123), où
- après l'entraînement du module d'apprentissage automatique (130), on passe du programme de régulation (129) au module d'apprentissage automatique (130), de sorte que celui-ci est remplacé par le module d'apprentissage automatique (130), et de sorte que la grandeur de commande est déterminée par le module d'apprentissage automatique (130) à partir des grandeurs d'état lues.

2. Procédé selon la revendication 1, dans lequel le système de contrôle (110) comprend un serveur (111) et le système informatique (120) comprend un client (121), le serveur (111) et le client (121) étant configurés de telle sorte que le client (121) peut effectuer un accès en lecture au serveur (111) de telle sorte que le sous-ensemble des données de processus (123) est transmis du serveur (111) au client (121) et que le client (121) peut effectuer un accès en écriture au serveur (111) afin de transmettre la grandeur de commande calculée au système de contrôle (110).

3. Procédé selon la revendication 2, dans lequel le client (121) est conçu comme maître et le serveur (111) comme esclave.

4. Procédé selon la revendication 2 ou 3, dans lequel le système de contrôle (110) dispose d'une interface informatique pour le raccordement du système informatique (120), par laquelle une liaison de communication directe est établie entre le système de contrôle (110) et le système informatique et au moins la transmission de l'ensemble partiel des données de processus (123) et la transmission de la grandeur de réglage s'effectuent par la liaison de communication directe.

5. Procédé selon la revendication 1, dans lequel le module d'apprentissage automatique (130) est entraîné avec d'autres ensembles de données d'entraînement qui sont générés à partir du fonctionnement ultérieur de l'installation chimique (140) par la régulation au moyen du module d'apprentissage automatique (130).

6. Procédé selon l'une des revendications précédentes, dans lequel le programme de simulation (128) comporte plusieurs modules de programme (141A, 142A, 143A) configurés chacun pour simuler un sous-système (141 ; 142 ; 143) de l'installation chimique (140), la fréquence de mise à jour des modules de programme (141A, 142A, 143A) étant configurée en fonction de la dynamique du sous-système (141 ; 142 ; 143), et les différents modules de programme (141A, 142A, 143A) calculent chacun une ou plusieurs des grandeurs d'état simulées et les stockent dans la mémoire (122) avec la fréquence de mise à jour respective.

7. Procédé selon la revendication 6, dans lequel un bloc de traitement ayant au moins une entrée et une sortie est formé par chacun des modules de programme (141A, 142A, 143A), et avec un programme de liaison pour lier les blocs de traitement.

8. Système de régulation d'un procédé chimique mis en oeuvre dans une installation chimique à grande échelle, le système étant conçu pour mettre en oeuvre un procédé selon l'une quelconque des revendications précédentes.

9. Installation chimique (140) comprenant un système selon la revendication 8.

10. Installation chimique (140) selon la revendication 9, dans laquelle il s'agit d'une installation pour la production d'acide sulfurique, de coke, de polymères, d'engrais, de gaz de synthèse, de ciment, d'urée, de nitrate d'ammonium ou pour le dessalement de l'eau.
